# EUROPEAN PATENT APPLICATION

(11) **EP 1 086 840 A1**
(43) Date of publication of application: **28.03.2001**
(21) Application number: 99118621.4
(22) Date of filing: 21.09.1999
(51) Int. Cl.: B60J 5/04

(54) **Motor vehicle door**

(71) Applicant: Iso Service S.r.l., 10100 Torino (TO) (IT); Itam Plast S.r.l., 10100 Torino (TO) (IT)
(72) Inventor: Roletto, Pierantonio, 10029 Villastellone (TO) (IT); Barone, Franco, 10100 Torino (TO) (IT); Caruso, Simone, 10044 Pianezza (TO) (IT)
(74) Representative: Di Francesco, Gianni

(57) **Abstract**

Metal structure for a motor vehicle door comprising: a Z-shaped supporting frame (2) capable of resisting the side intrusion tests and consisting of two side members (2,4) connected by a transverse connector (6); a U-shaped box-type body (13) connected to said frame (2) serving as lower contour ring for the motor vehicle door (1); a lower structural frame (23) to connect said external covering (20) and said box-type body.

## Description

The present invention relates to the structure of a motor vehicle door.

One of the major problems of motor vehicle mass production is represented by door assembling, due basically to the large number of component parts that must be assembled as well as to the adjustments that must be performed after the assembly. Besides, the late adoption of the anti-intrusion bars, located in the middle of the lower part of the door, makes the assembly more complicated ad increases the final weight of the assembled doors.

For this reason, the on-line assembly of the above mentioned parts increases both the production time and the costs, and highly skilled labour is required for it.

In addition, each motor vehicle model presents a particular door profile with a frame of determined dimensions so that it can't be mounted on different motor vehicles, no matter if the motor vehicles come from the same producer and the same production segment.

It is therefore necessary that the provided on-line assembly operations for the different component parts be such that it is possible to vary them according to each door, since the spaces inside the doors could be arranged in different ways.

It is an object of the present invention to provide a motor-vehicle door presenting a structure which is adapted to allow the assembly of all the "accessories" for the door, i.e. the door window regulator, the electrical lock, the loudspeakers, the window, the hinges etc., without the external covering of the door so that the assembly and the adjustment are very easily performed. In this way the correct assembly can be easily controlled in shorter time, without having the door on the assembly line.

This object, together with additional ones, is achieved by means of the present invention which relates to a metal structure for a motor-vehicle door presenting the characteristics illustrated in claim one.

Additional characteristics and advantages will become clear from the following description which refers to the appended drawings which are provided as non-restrictive example, and in which:
- figure 1 is a schematic view of the inner part of the structure of a motor-vehicle door, according to the present invention, without the internal control devices and the covering panel;
- figure 2 is a partial section along the line II-II in fig.1;
- figure 3 is a partial section along the line III-III in fig.1;
- figure 4 is a schematic view of two assembled components of the motor vehicle door in figure 1;
- figure 5 is a view of the external covering of the motor-vehicle door in figure 2 with two reinforcement structural frames;
- figure 6 is a view of the lower reinforcement structural frame of the covering in fig.5, and
- figure 7 shows a second possible embodiment of the motor-vehicle door according to the present invention.

With reference to the figures, reference number 1 indicates the motor-vehicle door complete of all component elements with the exception of the internal covering panel, which is called "finishing", the door window, all the accessories (window regulator, locks, loudspeakers, handles, etc. ) which are generally mounded inside it.

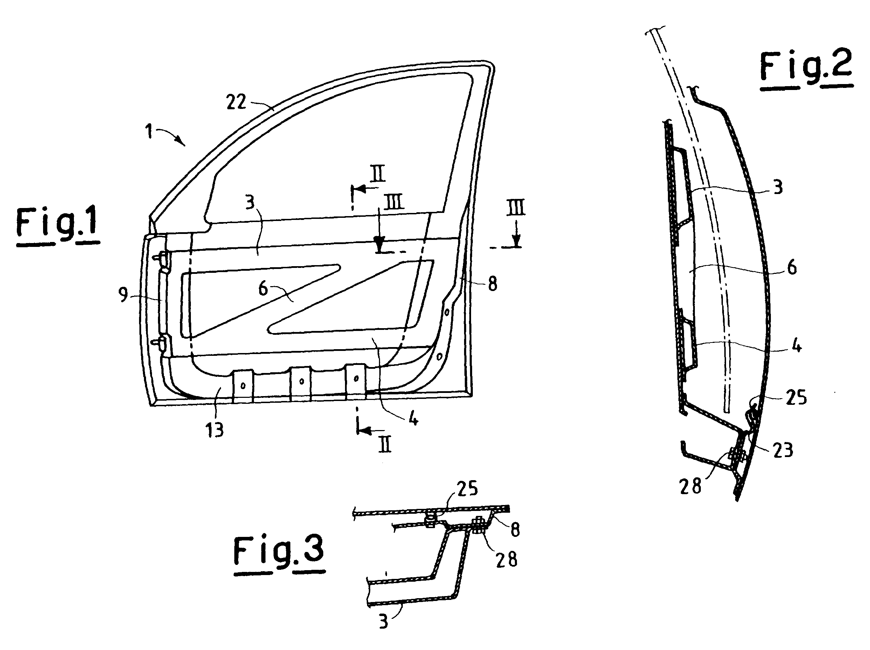

Besides, the metal structure forming the door 1 consists of a frame 2 which is the supporting element and is resistant to the side penetration tests, being made of Z-shaped box-type metal plate. It consists (figure 2) of two longitudinal members 3 and 4 connected by a transverse connector 6. In a preferred embodiment of the present invention, which the present description refers to, the ends of the longitudinal elements 3 and 4 are connected to each other by vertical posts 8 and 9 which strengthen the structure of the frame 2.

Hinges 11 are fixed at one end of the longitudinal members, in a known way, and form the articulated connection of the door with the body of the motor vehicle.

A U-shaped box-type body 13 is fixed on the frame 2 by means of screwing or welding or any other equivalent means, and this body serves as contour ring for the lower portion of the motor vehicle door opening (not shown). On the two branches of the U of such box-type body there are edges 14 and 15 forming the fixing planes for the connection with a supporting frame that will be described below. This mixed structure 17, which is formed by the frame 2 and by the box-type body 13, can be assembled and painted away from the assembly line, with great advantage in terms both of time and costs. Besides, as previously explained, all the accessories that shall be located inside the door, from the window regulator to the electrical lock, can be mounted and fixed on said structure.

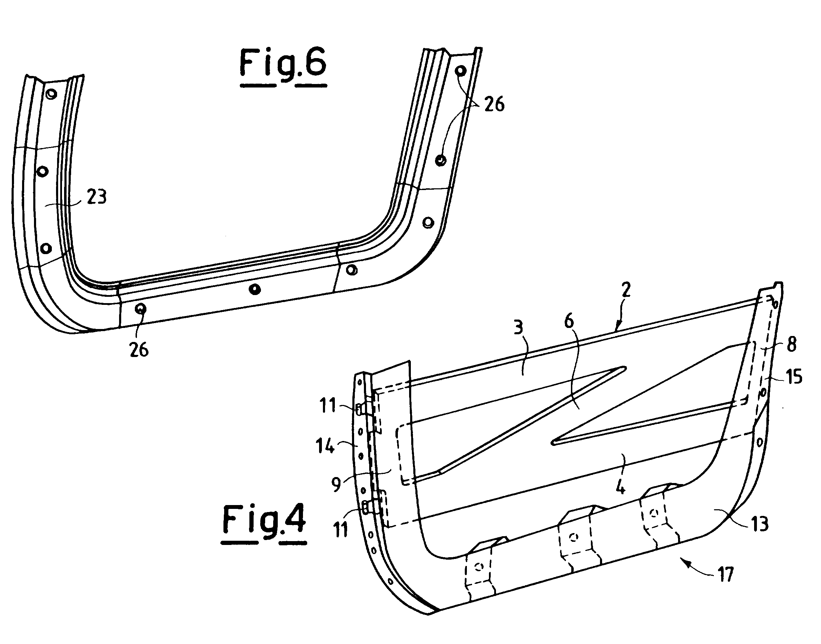

On the structure 17, and in particular on the box-type body 13 there will be connected the external covering plate 20, which is called "skin", of the door. In the embodiment shown in figure 5, this covering has already be fixed, by means of sizing and flanging, to a structural frame 22, which forms the window frame and is practically always made as a single piece with the window frame, and to a lower structural frame 23 (better shown in figure 6).

The lower structural frame 23 presents also holes 26 that allow it to be fixed to the box-type body 13 by means of screws or rivets 28. It is obvious that in the case of a convertible motor vehicle, the external covering part 20 will lack the upper structural frame 22 and the respective covering.

In order to complete the assembly of the structure of the motor vehicle door according to the invention, it will be enough to add a finishing panel (not shown) in its internal part.

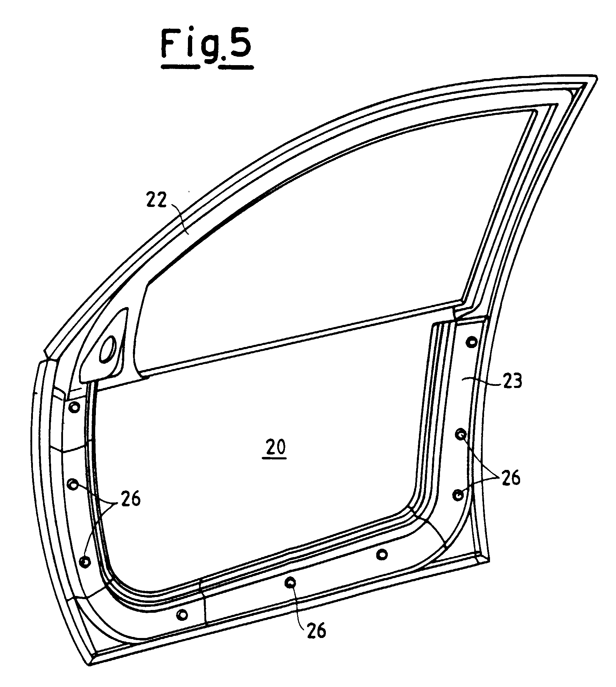

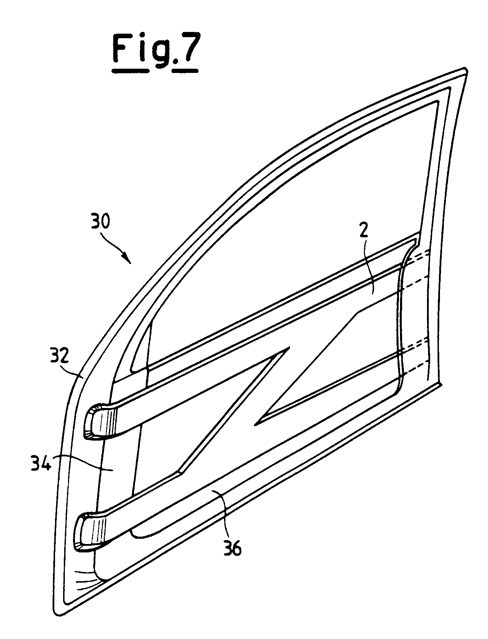

With reference to figure 7, it is possible to notice that the frame 2 of the invention has been inserted into the structure 30 of a door built in the traditional way, that is by connecting an external skin 32 to an internal structural frame 34, which can form the window frame, by means of flanging. The internal structure 34 has been "discharged" by making an opening 36 the form of which being such that it allows to insert and fix said frame 2. In this way, one of the advantages characteristic of the invention has been achieved, that is the possibility of mounting the door accessories on the frame 2 away from the line.

With respect to the previous state of art, the mixed structure 17 according to the invention presents, both in the first and the second embodiment, the major advantage that it can be uncoupled from the remaining component parts of the door, so that maintenance and replacement of parts and accessories damaged because of impacts or failures, can be performed easily.

Besides, the frame 2 serves also as anti-intrusion bar and allows to reduce the whole weight of the door as well as the number of the component parts, previously consisting of the-tube and the bracket.

## Claims

1. A metal structure for a motor vehicle door, characterised in that it comprises a combination of:
- a Z-shaped supporting frame (2) which resists the side intrusion tests and consists of two side members (3, 4) connected by a transverse connector (6);
- a U-shaped box-type body (13) connected to said frame (2) serving as lower contour ring for the motor vehicle door (1);
- an external covering (20);
- a lower structural frame (23) to connect said external covering (20) and said box-type body.

2. A structure as claimed in claim 1 characterised in that the lower structural frame (23) is connected to said box-type body (13) in a way that allows them to be separated.

3. A structure as claimed in claim 1 characterised in that the two ends adjacent to the side elements (3, 4) are connected to each other by means of vertical rods (8, 9).

4. A structure as claimed in claim 1 characterised in that the frame (2) is adapted to support the door accessories (1).

5. A structure as claimed in claim 1 characterised in that the external covering (20) is provided with an upper structural frame (22) which forms the window frame.

6. A structure as claimed in claim 1 characterised in that said supporting frame (2) is integral with a door consisting of an external covering (32) and an internal structural frame (34) connected by means of flanging in a known way.

7. A structure as claimed in claim 6 characterised in that the internal structural frame is provided with an opening (36) adapted to let said frame (2) pass through.
